# EUROPEAN PATENT APPLICATION

(11) **EP 1 736 717 A1**
(43) Date of publication of application: **27.12.2006**
(21) Application number: 05405391.3
(22) Date of filing: 20.06.2005
(51) Int. Cl.: F25B 21/00

(54) **Continuously rotary magnetic refrigerator and heat pump and process for magnetic heating and/or cooling with such a refrigerator or heat pump**

(71) Applicant: Haute Ecole d'Ingénieurs et de Gestion du Canton, 1400 Yverdon-les-Bains (CH)
(72) Inventor: Kitanovski, Andrej, 1000 Ljubljana (SI); Sari, Osmann, 1009 Pully (CH); Gendre, Fabrice, 1054 Morrens (CH); Egolf, Peter Williams, 5702 Niederlenz (CH); Derrick, Ata-Caesar, 1007 Lausanne (CH)
(74) Representative: Nithardt, Roland

(57) **Abstract**

The present invention concerns a continuously rotary magnetic refrigerator or heat pump able to operate in a continuously working process, having a high efficiency and a low cost of manufacturing. This rotary magnetic refrigerator or heat pump (10) comprises a cylindrical structure (11) provided with at least one stationary external cylindrical housing (11a) containing at least one rotating internal magnetocaloric cylinder (12) containing at least one working fluid. The rotating internal magnetocaloric cylinder (12) rotates around a longitudinal axis (13) through a magnetic field generated by at least one permanent magnet located at one half portion of the internal magnetocaloric cylinder (12) and generating flux lines crossing the rotating internal magnetocaloric cylinder (12) in a direction perpendicular to the longitudinal axis (13). One half portion of the rotating internal magnetocaloric cylinder (12) is connected to a cold fluid duct (17) and the other half portion of the rotating internal magnetocaloric cylinder (12) is connected to a hot fluid duct (18). This rotating internal magnetocaloric cylinder (12) is rotated by a gear or belt drive pulley (15) moved by a belt (15a) and a driving motor (15b) mounted on its periphery.

## Description

### Technical Field

The present invention concerns a continuously rotary magnetic refrigerator or heat pump comprising a cylindrical structure provided with at least one stationary external cylindrical housing containing at least one rotating internal magnetocaloric cylinder containing at least one working fluid and which rotates around a longitudinal axis through a magnetic field generated by at least one permanent magnet located at one half portion of said at least one internal magnetocaloric cylinder and generating flux lines crossing said at least one rotating internal magnetocaloric cylinder in a direction perpendicular to the longitudinal axis.

The present invention also concerns a process for magnetic heating and/or cooling in a continuously rotary magnetic refrigerator or heat pump comprising a cylindrical structure provided with at least one external cylindrical housing containing at least one rotating internal magnetocaloric cylinder containing at least one working fluid and which rotates around a longitudinal axis through a magnetic field generated by at least one permanent magnet located at one half portion of said at least one internal magnetocaloric cylinder and generating flux lines crossing said at least one rotating internal magnetocaloric cylinder in a direction perpendicular to the longitudinal axis, in which the rotating internal magnetocaloric cylinder comprises at least two pairs of opposed sectors and is provided with at least one conduit with one end connected to one sector of one pair of opposed sectors and the other end connected to the other sector of said pair of sectors.

### Background Art

In the last decade, the discovery of new magnetic refrigerants-alloys called magnetocaloric materials with high Currie temperatures and giant magnetocaloric effect (MCE) resulted in the development of numerous applications for magnetic cooling. These developments may be the inauguration of alternative cooling technologies, which could drastically influence the application of conventional cooling techniques. In the quest for cooling technologies that do not need the conventional environmentally benign refrigerants, magnetic refrigeration systems could represent an outstanding solution.

Research and development activities of the last twenty years have brought about numerous magnetic refrigerators which operate with a variety of magnetocaloric materials and in different thermodynamic cycles. So far, most magnetic refrigerators function according to the principle of a magnetocaloric material moving through a magnetic field by reciprocating or rotating motion. The majority of early scientific publications refer to the use of superconducting magnets for inducing the temperature change of the magnetocaloric material due to its magnetocaloric effect. Recently the Astronautics Cooperation of America (C.B. Zimm, A. Sternberg, A.G. Jastrab, A.M. Boeder, L.M. Lawton, J.J. Chell, Rotating bed magnetic refrigeration apparatus, US Patent 6,526,759, 2003) reported on the construction of the world's first "room temperature" magnetic refrigerator operating with permanent magnets.

Permanent magnets have significant advantages when compared to superconducting or conventional electro-magnets. Contrary to electro-magnets, no external power is needed to generate the magnetic field and no heat is generated by dissipation of electric energy. Superconducting magnets, together with a dewar, are excessively costly, and their application in magnetic refrigeration would undermine the competitiveness of this technology. The possibility of running regeneration cycles and cascade systems when using existing magnetocaloric materials allows even the use of permanent magnets with low magnetic fields. Permanent magnets with very high magnetic fields are also being developed progressively (see K.H. Müller, G. Krabbes, J. Fink, S. Gruss, A. Kirchner, G. Fuchs, L. Schultz, New permanent magnets. Journal of Magnetism and Magnetic Materials 2001, 226-230, p. 1370-1376 and Kumada M., Iwashita Y., Antokhing E.A., Issues with permanent magnets. NANOBEAM 2002, Lausanne, Switzerland, Conference web-proceedings), so it appears reasonable to predict that future magnetic refrigerators operating near room temperatures will comprise permanent magnets. An extensive review on existing magnetic refrigeration technologies may be found in the book of Tishin (A.M.Tishin, Y.I. Spichkin, The Magnetocaloric Effect and its Applications, Institute of Physics, Series in Condensed Matter Physics, Institute of Physics Publishing 2003) or in the paper of Yu et al. (Yu B.F., Gao Q., Zhang B., Meng X.Z., Chen Z., Review on research of room temperature magnetic refrigeration. International Journal of Refrigeration 2003, 26, p.1-15).

A prior art device is disclosed in US 3,108,444 in which the magnetocaloric material forms a ring rotating through two baths, e.g. a heat source bath and a heat sink bath.

Another device of this type is disclosed by WO 2004/059221 that concerns a rotary magnetic refrigerator having a housing and a rotatable magnetocaloric cylinder located inside of said housing, containing a through flowing working fluid and alternatively submitted to a magnetic field provided by magnets. One of the drawbacks of this prior art device is that between the housing and the magnetocaloric cylinder, there may be leakage of the working fluid. Furthermore, the efficiency of this device is low and the non-efficient and low cost solutions are clearly disclosed for accomplishing the rotation of the magnetocaloric cylinder.

### Disclosure of Invention

To overcome the above drawbacks of the prior art devices, an object of the present invention is to provide a rotary magnetic refrigerator/heat pump (RMR/RMHP), able to operate in a continuously working process, able to be applied in industrial thermal processes, HVAC systems, refrigerators, heat pumps, automobiles, trains, planes and spacecrafts, having a high efficiency and low cost of manufacturing.

This object of the present invention is a continuously rotary magnetic refrigerator or heat pump such as defined in the preamble wherein said rotating internal magnetocaloric cylinder is rotated by a driving motor. Preferably, this driving motor connects directly the axis of the cylinder.

Said rotating internal magnetocaloric cylinder also may be rotated by a gear or belt drive pulley mounted on the periphery of said rotating internal magnetocaloric cylinder and moved by the said driving motor.

Said continuously rotating internal magnetocaloric cylinder is preferably frame-suspended with bearings including seals in the stationary external cylindrical housing. One half portion of this rotating internal magnetocaloric cylinder is preferably connected to a cold fluid duct and the other half portion of the rotating internal magnetocaloric cylinder is preferably connected to a hot fluid duct. A flat separation of the two ducts is advantageously provided parallel to their longitudinal axis. At each longitudinal end of the external cylindrical housing a flange is provided for connecting both fluid ducts and also for supporting a central axis of the rotating internal magnetocaloric cylinder. The rotating internal magnetocaloric cylinder preferably has an extended cylindrical part for supporting the gear or belt drive pulley. Advantageously, an annular space is provided between the stationary external cylindrical housing and the rotating internal magnetocaloric cylinder containing a highly permeable fluid. In a preferred embodiment, the internal magnetocaloric cylinder comprises at least two pairs of opposed sectors and it is preferably provided with at least one conduit with one end connected to one sector of one pair of sectors and the other end connected to the other sector of said pair of sectors for transferring heat from one sector to the other for regeneration of heat in the internal magnetocaloric cylinder.

The working fluid (e.g. fluid for heat source and heat sink) enters the magnetocaloric cylinder through the front face and passes through the magnetocaloric cylinder parallel to the rotating axis. A highly permeable fluid may be contained between the magnetocaloric cylinder and the housing in an annular space separating both components and has the purpose of increasing the magnetic flux density or the purpose of a regeneration fluid or both purposes together.

A magnet is situated in such a way that more or less half of the circular cross section of the magnetocaloric cylinder is exposed to the magnetic field. The magnetic flux lines are more or less perpendicular to the axis of rotation. The concept enables a continuously working device and the use of permanent magnets with low magnetic field strength.

For special applications requiring high efficiency, the continuously rotary magnetic refrigerator or heat pump of the invention may comprise a plurality of cylindrical structures, each provided with at least one stationary external cylindrical housing containing at least one rotating internal magnetocaloric cylinder containing at least one working fluid and which rotates around a longitudinal axis through the magnetic field generated by at least one permanent magnet located at one half portion of said at least one internal magnetocaloric cylinder and generating flux lines crossing said at least one rotating internal magnetocaloric cylinder in a direction perpendicular to the longitudinal axis, in which the plurality of cylindrical structures are mounted in a cascade manner and defines a plurality of stages.

In this case, each stage of the cascade system may comprise different and uniform and/or layered magnetocaloric material.

The process of the invention is characterized in that a progressive cooling down of the magnetocaloric material subjected to the magnetic field and a progressive heating up of the magnetocaloric material moving through the zone with less or no magnetic field is performed during the regeneration operation consisting of a continuous exchange of working fluid through the at least one said conduit.

### Brief Description of Drawings

Figure 1A is a cross-sectional view showing a first embodiment of a rotary magnetocaloric refrigerator or heat pump according to the invention,
Figure 1 B is an axial sectional view showing the rotary magnetocaloric refrigerator or heat pump of Figure 1A,
Figure 2A is a cross-sectional view showing a second embodiment of a rotary magnetocaloric refrigerator or heat pump according to the invention,
Figure 2B is an axial sectional view showing the rotary magnetocaloric refrigerator or heat pump of Figure 2A,
Figure 3A is a cross-sectional view showing a third embodiment of a rotary magnetocaloric refrigerator or heat pump provided with one regeneration loop, according to the invention,
Figure 3B shows the functional zones of the rotary magnetocaloric refrigerator or heat pump of Figure 3A,
Figure 3C is a T-s diagram showing the Brayton cycle which the magnetocaloric material undergoes during operation of the rotary magnetocaloric refrigerator or heat pump of Figure 3A,
Figure 4A is a cross-sectional view showing a rotary magnetocaloric refrigerator or heat pump similar to that of Figure 3A with conduits for the flow of regeneration fluids,
Figure 4B is a T-s diagram showing the modified Brayton cycle which the magnetocaloric material undergoes during operation of the rotary magnetocaloric refrigerator or heat pump of Figure 4A,
Figures 5A, 5B, 5C, 5D and 5E show examples of different connections of making a regenerative process in a rotary magnetocaloric refrigerator or heat pump using liquids, according to the invention,
Figures 6A, 6B, 6C, 6D, 6E, 6F and 6G show examples of different connections of making a regenerative process in a rotary magnetocaloric refrigerator or heat pump using gases, according to the invention,
Figure 7A shows a cascade system using four rotary magnetocaloric refrigerators or heat pumps according to the invention, and
Figure 7B shows a T-s diagram, which corresponds to the operational phases of the cascade system of Figure 7A.

### Modes for carrying out the Invention

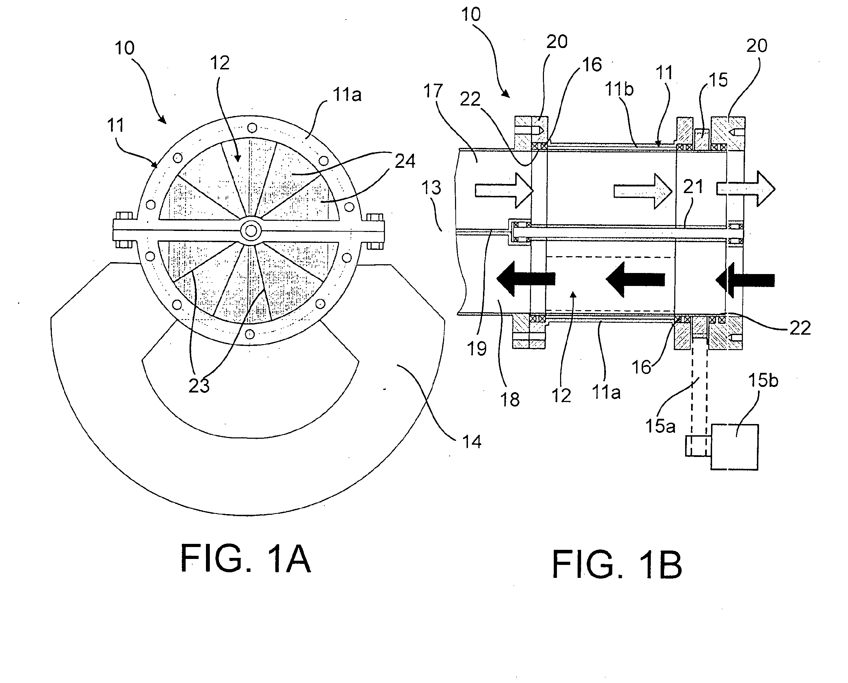

Figures 1A and 1 B represent a first embodiment of a rotary magnetic refrigerator or a heat pump 10 having a cylindrical structure 11 provided with a stationary external cylindrical housing 11a containing a rotating internal magnetocaloric cylinder 12 containing a working "fluid" and which rotates around a longitudinal axis 13 through the magnetic field generated by a permanent magnet 14 located at the lower half portion of said rotating internal magnetocaloric cylinder 12. The permanent magnet 14 is designed to limit the magnetic field to an area corresponding to the lower half part of the said rotating internal magnetocaloric cylinder 12 and to generate flux lines crossing said rotating internal magnetocaloric cylinder 12 in a direction perpendicular to the longitudinal axis 13. The rotating internal magnetocaloric cylinder 12 is rotated by a gear or belt drive pulley 15 moved by gears or a chain or a belt 15a by a driving motor 15b. The rotating internal magnetocaloric cylinder 12 is frame-suspended with bearings 16 including seals in the stationary external cylindrical housing 11 a and the seals prevent leakage of the working fluid from the magnetocaloric cylinder 12. Said rotating internal magnetocaloric cylinder 12 rotates, while all other elements (e.g. magnets, pipes, housing etc.) stay at rest. An annular space 11b containing a highly permeable fluid is provided between the stationary external cylindrical housing 11a and the rotating internal magnetocaloric cylinder 12.

The upper half portion of the magnetocaloric cylinder 12 is connected to a cold fluid duct 17 and the lower half portion of the said rotating internal magnetocaloric cylinder 12 is connected to a hot fluid duct 18. A flat separation 19 of the two ducts 17 and 18 is provided parallel to the longitudinal axis 13. A flange 20 is provided at each longitudinal end of the stationary external cylindrical housing 11 a for connecting the fluid ducts 17 and 18 and also for supporting the central axis 21 of the rotating internal magnetocaloric cylinder 12.

The said rotating internal magnetocaloric cylinder 12 has an extended cylindrical part 22 at both longitudinal ends for supporting the gear or belt drive pulley 15 at one end and for supporting the bearings 16 at both ends

Currently, many different materials which could be used as magnetic refrigerants in rotary magnetic refrigerators and heat pumps exist. To ensure a continuously working device, the magnetocaloric cylinder has to be kept in rotation. The rotating velocity depends on the specific application, on the magnetic field strength, on the magnetocaloric material and on the properties and mass flow of the fluid flowing through the cylinder. The constitution of the magnetocaloric material in the cylinder may be a periodic structure, a porous structure or grains of magnetocaloric material. The working fluids, which serve as heat sources or heat sinks in the magnetocaloric material, may be gases, liquids, suspensions, or nanofluids. The minimum number of working fluids is one. The minimum number of magnetocaloric materials used in the device is one. If more are used, they may be layered in the axial or azimuth direction. The number of magnets, preferably permanent magnets, used in the device is minimum one. They may deliver a uniform or alternating magnetic field.

In the refrigerator or heat pump 10 shown in Figure 1A, during magnetisation and demagnetisation of the magnetocaloric material, the material exhibits adiabatic temperature increase and decrease respectively, as a result of its internal change of magnetic entropy called magnetocaloric effect. The "warm" part of the cylinder is subjected to the magnetic field. Heat is continuously extracted out of this part by a cooling fluid flowing through it (lower portion of the rotating internal magnetocaloric cylinder 12 in Figure 1A). The heat absorbed by the cooling fluid is rejected elsewhere to a "hot" heat exchanger (not represented). As the rotating internal magnetocaloric cylinder 12 rotates, its "warm" part moves out of the zone of magnetic field. This causes the magnetocaloric material in the cylinder 12 to demagnetise, and as a consequence, to cool down adiabatically to a certain temperature. The part of the rotating internal magnetocaloric cylinder 12 which is not subjected to the magnetic field is the "cold" part and heat is continuously brought to this part by a heat source fluid (chilled fluid) flowing through it (upper portion of the rotating internal magnetocaloric cylinder 12 in Figure 1A). The heat source fluid (chilled fluid) absorbs heat elsewhere out of a "cold" heat exchanger (e.g. air-conditioned building, cold store, thermal process). It is to be noted that, especially in air conditioning, the chilled fluid may be directly introduced into the space or process to be cooled, without using any additional heat exchangers. An insulating appliance may be used to prevent heat losses and improve efficiency. If the permanent magnet cannot be designed to provide a magnetic field in a delimited zone of the rotating internal magnetocaloric cylinder 12 due to magnetic flux leakage, a fluid with very high magnetic permeability may be contained in the annular space 11 b between the rotating internal magnetocaloric cylinder 12 and the stationary external cylindrical housing 11a. This fluid would perform as a joke between the permanent magnet 14 and the rotating internal magnetocaloric cylinder 12 and serves to bundle and direct the magnetic flux lines through that lower half portion, serve as a regeneration fluid or have both of these functions. The seals at adequate locations prevent this fluid from migrating from the "warm" part to the "cold" part of the cylinder.

The internal rotating magnetocaloric cylinder 12 may be provided with separators 23 defining sectors 24 of the said internal cylinder 12. These separators 23 may also be made of magnetocaloric material and have to prevent the mixing of the working fluid between the different sectors and to prevent the flow of fluid in azimuth direction. The separators 24 extend axially into the extended cylindrical parts 22 of the magnetocaloric cylinder 12. The number of flow separators 24 may be determined according to the operation characteristics of the refrigerator or heat pump. The rotating velocity of the magnetocaloric cylinder 12 has to be low enough to ensure minimal migration of the working fluid between the "warm" and the "cold" halves of the cylinder. The system allows co-current or counter current flow of the working fluids. The minimum number of working fluids is one.

The configuration of the system allows external pipe or channels connections, which are static since the fluid ducts 17 and 18 are attached to the refrigerator or heat pump housing 11a directly or with the flanges 20.

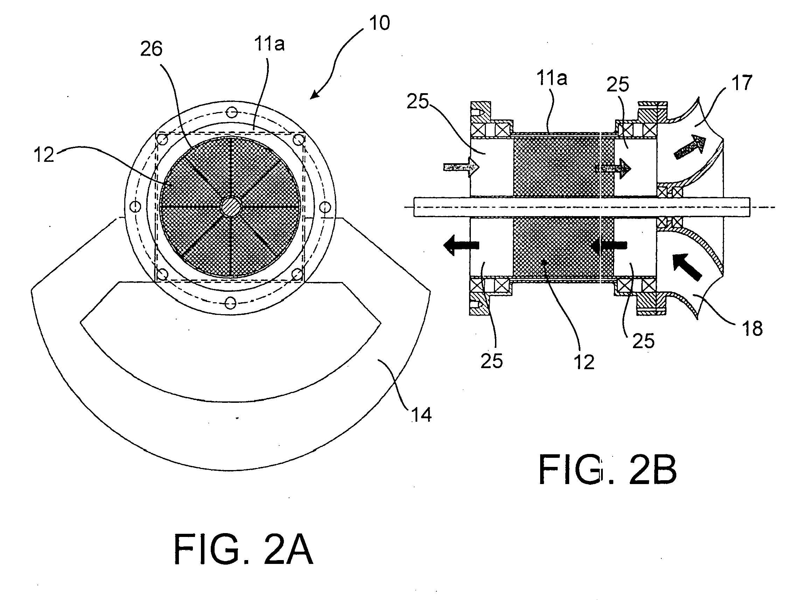

Figures 2A and 2B show a second embodiment of a rotary magnetocaloric refrigerator or heat pump 10 in which the stationary external housing 11 a is of a square shape, instead of a cylindrical shape as that of Figures 1A and 1 B. Similar components to those disclosed in Figures 1A and 1 B are designated by the same references.

The rotating internal magnetocaloric cylinder 12 comprises extensions 22 at both ends which do not contain magnetocaloric material, but rather, are meant for the bearings and seals mounted between these extensions and the cylindrical part of the stationary external housing 11 a. The internal rotating magnetocaloric cylinder 12 is rotated by a driving axle and an external motor (not shown). The working fluid ducts 17 and 18 and the motor and axle means of driving the cylinder are alternative solutions to the ones presented in Figures 1A and 1 B.

One should note that there might be different types of housing cross sections, not necessary only the cylindrical and square type, which are presented in this application. The square part of the housing is limited to the length of the magnetocaloric part of the cylinder, while the extensions at both ends of the square part are cylindrical, in order to carry the bearings of the cylinder. The idea of the square housing arises from the need to bundle and direct a maximum of magnetic flux lines through that half of the cylinder, which is magnetised (in Figures 2A and 2B, the lower half of the magnetocaloric cylinder). To achieve this, the space 26 between the square housing and the cylindrical cylinder is filled with a fluid that has a high magnetic permeability.

As the internal rotating magnetocaloric cylinder 12 rotates, there will be a sector moving into and a sector moving out of the magnetic field at any given time. These sectors contain working fluids at different temperatures. A certain amount of the working fluid contained in each of these sectors at the instant it moves into, or out of the magnetic field, will also be carried along. This means some heat sink fluid is migrated from the "warm" magnetised zone to the "cold" demagnetised zone, while some heat source fluid is migrated from the "cold" demagnetised zone to the "warm" magnetised zone. The amount of migrated working fluid depends on the rotation speed of the internal magnetocaloric cylinder 12 and on the flow velocity of the working fluids through the magnetocaloric material. In any case, this migration is undesired and needs to be reduced to a minimum. This may be accomplished by the following procedure: Some amount of heat sink fluid called cooling fluid, is introduced into a sector of the internal rotating magnetocaloric cylinder 12 on the "cold" side just before this sector moves into the magnetic field. Simultaneously, some amount of heat source fluid called chilled fluid, is introduced into a sector of the internal rotating magnetocaloric cylinder 12 on the "warm" side just before this sector moves out of the magnetic field. Another approach to reduce this working fluid migration may be with appropriate shapes e.g. curved flow separators at both ends of the internal rotating magnetocaloric cylinder 12.

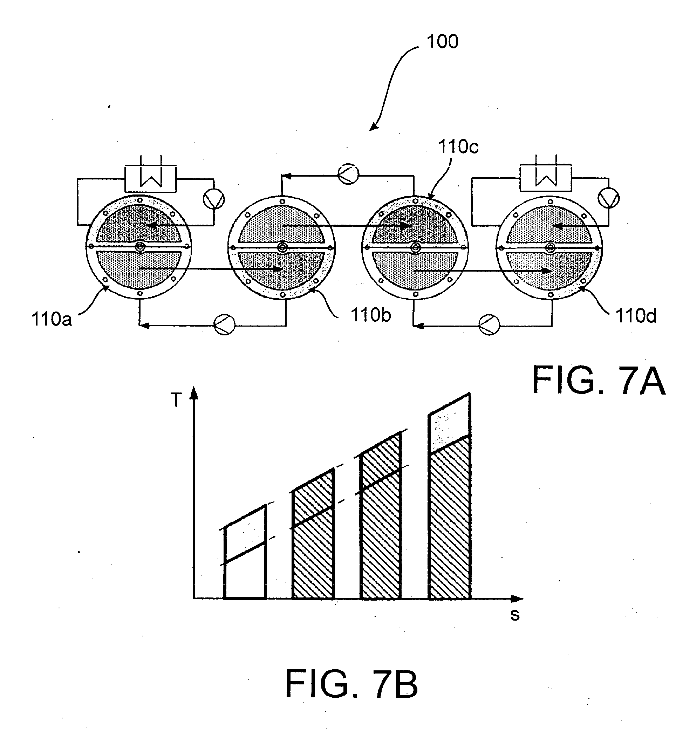

The magnetocaloric effect of currently existing magnetocaloric materials does not enable high temperature differences between the cold source and hot sink, as are common in conventional vapour compression refrigerators. To disparage this drawback, single-stage rotary magnetic refrigerators or heat pump may be modified to a regenerative refrigerator or heat pump or grouped to a cascade system. A cascade system consists of a chain of refrigerator or heat pump units in which different magnetocaloric materials may be used for the internal rotating magnetocaloric cylinder 12, so as to achieve the maximal magnetocaloric effect at the operating temperatures in each stage. This cascade system will be described with reference to Figures 7A and 7B

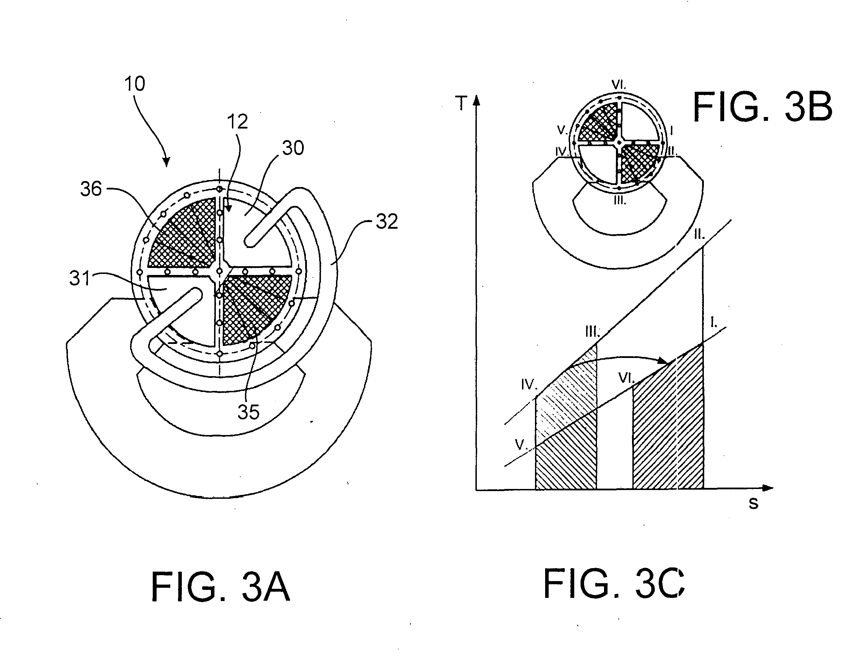

A regeneration system consists of only one refrigerator/heat pump with one internal rotating magnetocaloric cylinder 12 containing one or more magnetocaloric materials as illustrated by Figure 3A. The concept and operational process of a regeneration cycle is demonstrated in Figures 3A and the related diagram, Figure 3B, with the example of a single-stage rotary magnetic refrigerator/heat pump including one regeneration loop.

Basically regeneration in this refrigeration or heat pump process means that the regeneration of heat at one location in the process is performed with heat extracted at another location in the process. In the refrigerator or heat pump 10 shown in Figure 3A, the internal rotating magnetocaloric cylinder 12 comprises two pairs of opposed sectors 30, 31 and 35, 36 and it is provided with one conduit 32 with one end connected to the sector 30 and the other end connected to the sector 31 of said pair of sectors 30, 31. The regeneration of heat is performed between sectors 30 and 31. The working fluids contained in these two sectors are exchanged through conduit 32 with the purpose of transferring heat from one sector to the other. The choice of the device for conveying the working fluids through the conduit 32 depends on the type of fluids used. The T-s diagram in Figure 3C shows the assumed Brayton cycle that the magnetocaloric material undergoes during operation of a single-stage rotary magnetic refrigerator or heat pump with one regeneration loop. The positions in the device, denoted by roman numbers in the schematic (Figure 3E), correspond to the different states of the material, denoted by roman numbers I, II, III, IV, V and VI in the T-s diagram. The number of regeneration loops is generally limited by geometric characteristics of a refrigerator or heat pump.

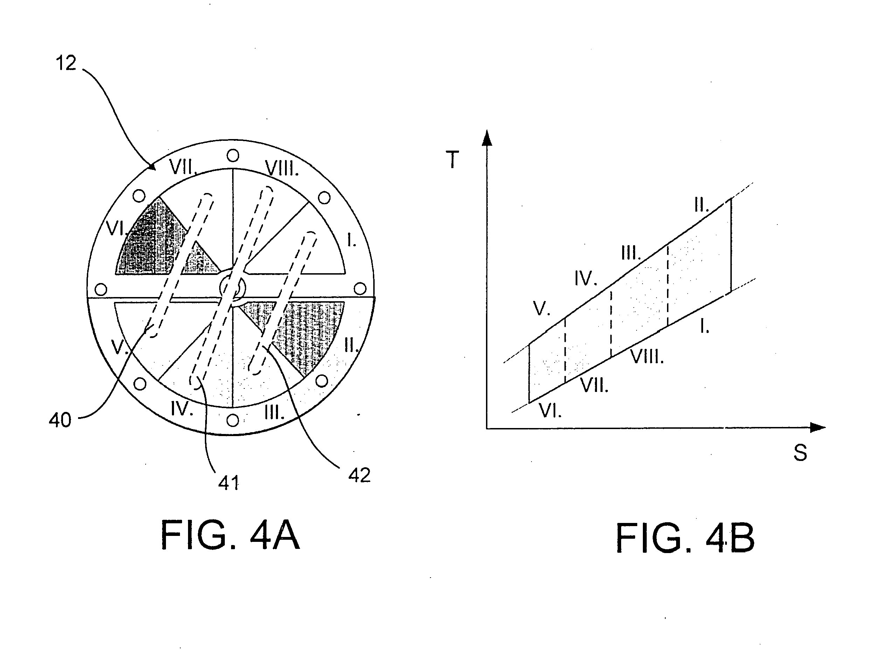

Figure 4A represents another embodiment of a regenerative magnetic refrigerator or heat pump and Figure 4B represents a T-s diagram showing the assumed Brayton cycle which the magnetocaloric material undergoes during operation of the single-stage rotary magnetic refrigerator or heat pump of Figure 4A.

In Figure 4A the rotating internal magnetocaloric cylinder 12 is divided into eight sectors I, II, III, IV, V, VI, VII and VIII. Sectors II and VI are the "warm" and "cold" sectors respectively. All the other sectors subjected to the zone of higher magnetic field (III, IV, V), and those in the lower or zero magnetic field (VII, VIII, I) are used for regeneration through conduits 40, 41 and 42. The regeneration process in the magnetic refrigerator or heat pump shown in this Figure 4A can be described with relation to the T-s diagram of Figure 4B, starting with the movement of the magnetocaloric material from the zone of low or zero magnetic field, to the zone of strong magnetic field (I to II). The material crossing over undergoes adiabatic magnetisation and an increase in temperature. This temperature is lowered by a cooling fluid passing through and extracting heat out of the sector II.

Between sectors III to V in the magnetic field and sectors VII to I outside the magnetic field, regeneration processes are performed. For the configuration given in Figure 4A, cooling fluid is diverted from the outlet of sector III to the inlet of sector I, while chilled fluid is diverted from the outlet of sector I to the inlet of sector III. This exchange is also performed between sectors IV and VIII and between sectors V and VII. The conduits 40, 41 and 42 for the flow of regenerative fluids are illustratively shown with dashed lines in Figure 4A. The regeneration processes cause a progressive cooling down of the magnetocaloric material subjected to the magnetic field and a progressive heating up of the magnetocaloric material moving through the zone with less or no magnetic field.

Upon exiting the zone of constant magnetic field and entering the zone without magnetic field (from sector V to VI), the magnetocaloric material undergoes adiabatic demagnetisation and a decrease in temperature due to the magnetocaloric effect. This temperature is raised by a heat source fluid passing through and bringing heat to the magnetocaloric material in the respective sector VI.

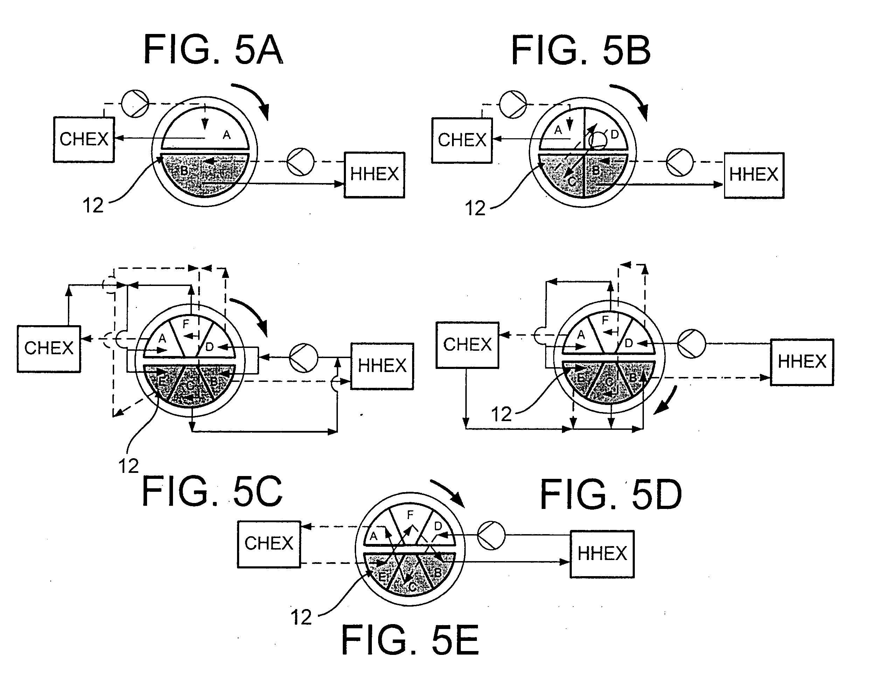

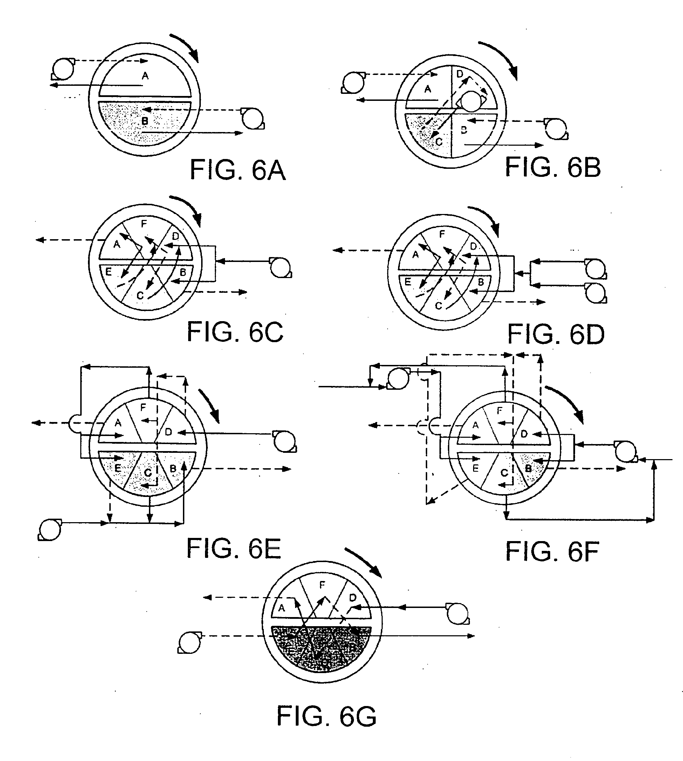

Since different kinds of fluids, regenerative processes and connections may be used in this invention, Figures 5A to 5E and 6A to 6G show some examples of fluid connections and different cycles for liquids included suspensions and nanofluids and gases respectively. One should note that different connections might lead also to different thermodynamic cycles.

Figure 5A to Fig 5E show some examples of different connections and possibilities of making a regenerative process in a magnetic refrigerator or heat pump with working fluids as being liquids, suspensions and nanofluids.

According to these figures, five different examples of fluid connections are presented. The solid lines present the front side connections of a magnetic refrigerator or heat pump and dashed lines present the backside fluid connections. All the connections are static and do not rotate together with the internal rotating magnetocaloric cylinder 12. The shadowed area presents the area influenced by the magnetic field.

Figure 5A shows an example of using two liquids or suspensions or nanofluids as heat sink and heat source fluids. The device in this case corresponds to a single stage device without regeneration, where the upper half of the internal rotating magnetocaloric cylinder 12 presents the "cold" part of the device, and the lower half presents the "warm" part of the device. CHEX and HHEX denote cold heat exchanger or heat source and hot heat exchanger or heat sink respectively.

Figure 5B is similar to the device presented in Figure 3A. As mentioned before, there may be several sectors used for a regenerative process, as shown in Figure 4A.

Figure 5C presents a "one pump" solution, where only one pump is needed for the working fluid to flow through different sections of the internal rotating magnetocaloric cylinder 12 and through the two heat exchangers. The internal rotating magnetocaloric cylinder 12 comprises six sectors with three sectors in the magnetic field and three sectors out of the magnetic field. One should note that the number of sectors is not limited and depends on the specific application. Starting with the hottest sector B, the fluid heated up in this sector flows (dashed line) into the HHEX, where heat is extracted from it and it is therefore cooled to a certain temperature. A pump used in the process pumps this fluid from the HHEX and also pumps the fluid, which leaves the sector C. Before entering the pump, the two fluids mix. The fluid leaving the pump is separated into two sectors, sector B and sector D. The fluid in sector D is cooled down subsequently flows (dashed line) towards sectors F and C. Before it enters these sectors, the fluid from the sector E mixes with it. One part of fluid (as a mixture of fluids from sectors E and D) flows into sector F and one part flows into sector C. The one in sector C is warmed up and then flows to be mixed with the fluid that is leaving the HHEX. The one which enters sector F is cooled down and flows further to sectors A and E. Before it enters these sectors it mixes with the fluid coming from the CHEX. Some amount of fluid, the mixture of fluids from sectors F and CHEX, flows into sector E and the rest flows into sector A. The one which enters sector E is warmed up and flows further to mix with the fluid from sector D. The one which enters sector A cools down and flows further to the CHEX, where it is warmed.

Figure 5D represents another case in which the fluid from the HHEX is pumped into sector D, where it is cooled down. After that, some amount of the fluid from sector D flows into sector C and the rest flows into sector F. The one, which flows into sector C warms up and then leaves the sector C to mix with fluid coming from the CHEX and from sector E. The fluid entering sector F cools down, then flows further partly to sector A and partly to sector E. The fluid flowing into sector E is warmed up, then flows on to mix with the flow from the CHEX. The fluid in the sector A is cooled and then flows into the CHEX, where it is warmed up. From the CHEX, the fluid mixes with fluid flowing from sectors E and C, so its temperature rises, then the mixture enters the hottest part B of the device, warms up and flows further into the HHEX. As one may notice, in this particular case, the mass of fluid flowing through the HHEX is not the same as that flowing through the CHEX.

According to Figure 5D, a kind of "zig-zag" connection between sectors is made. The flow from the HHEX is directed into sector D, where it is cooled down, then flows further into sector C, where it is warmed up and then continues to sector A, where it is cooled down again. From sector A, the fluid flows through the CHEX then is directed to sector E, from where it flows to sector F and further to sector B, the hottest part of the device. The fluid from sector B flows into the HHEX in order to reject heat out of the system.

Similar to the configurations shown in Figures 5 for liquids, suspensions and nanofluids, various examples may be shown for gases (Figures 6). Figure 6A and Figure 68 correspond to Figure 5A and Figure 5B respectively with the exception that ventilators, blowers, compressors or other similar means have to be used and that in most cases, no additional heat exchanger will be used.

According to Figure 6C, the ventilator or other means, directs gas, for example fresh air from ambient, into sectors B and D. The gas in the sector B warms up, then some amount is directed out of the device to extract heat, while the rest is first mixed with the air from sector C and then enters sector D, where it is cooled down. After leaving sector D, the gas is directed partly into sector C and partly into sector F. The gas which entering sector C is warmed up and leaves this sector to mix with the gas flowing into sector D. The gas flowing from sectors D to F is mixed with gas from sector E. In the sector F, it is cooled down, then separated again into two flows to sectors A and E. From sector E the gas flows to be mixed with the gas coming out from sector D. In sector A the gas is cooled down, then flows into a space with a demand for cooling.

The device of Figure 6D is similar to that of Figure 6C with the exception that the air from the cooled space is regenerated by use of an additional ventilator or other similar means.

The device of Figure 6E is similar to that of Figure 5D, with the exception that ventilators or other similar means are used in this case, and no additional heat exchangers are used.

The device of Figure 6F is similar to the device of Figure 5C, with the exception that ventilators or other similar means are used in this case, and no additional heat exchangers are used.

The device of Figure 6G is similar to the device of Figure 5E, with the exception that ventilators or other similar means are used in this case, and no additional heat exchangers are used.

Cascade systems have the disadvantage of possible overlapping of the cycles between the stages which reduces efficiency. This is not usually the case in regeneration systems. However, each refrigerator/heat pump (stages) of a cascade system may contain different magnetocaloric material that may also be layered in azimuth and axial direction. By this, the largest magnetocaloric effect is adjusted for each stage. Figure 7A and Figure 7B disclose a cascade system 100 where four rotary magnetic refrigerators or heat pumps with cylindrical structures 110a to 110d are connected in a line. The fluid flowing through the "cold" part cylindrical structure 110a is transported into the "warm" part that is in the magnetic field of the cylindrical structure 110b. The "cold" part of the cylindrical structure 110b is connected to the "warm" part of the cylindrical structure 110c, and the "cold" part of the cylindrical structure 110c is connected to the "warm" part of the cylindrical structure 110d. In the last cylindrical structure 110d, the "cold" part is connected to an external heat source. Each refrigerator or heat pump in a cascade system may comprise a rotating internal magnetocaloric cylinder containing a different magnetocaloric material. The T-s diagram of Figure 7B is purely illustrative, since the entropy dependence of the temperature may vary for different magnetocaloric materials. In the worst case, strong overlapping of the cycles can occur.

## Claims

1. Continuously rotary magnetic refrigerator or heat pump comprising a cylindrical structure (11) provided with at least one stationary external cylindrical housing (11a) containing at least one rotating internal magnetocaloric cylinder (12) containing at least one working fluid and which rotates around a longitudinal axis (13) through a magnetic field generated by at least one permanent magnet (14) located at one half portion of said at least one internal magnetocaloric cylinder (12) and generating flux lines crossing said at least one rotating internal magnetocaloric cylinder (12) in a direction perpendicular to the longitudinal axis (13), wherein said rotating internal magnetocaloric cylinder (12) is rotated by a driving motor (15a).

2. Continuously rotary magnetic refrigerator or heat pump according to claim 1, wherein said rotating internal magnetocaloric cylinder (12) is rotated by a driving motor (15a) which connects directly the axis of the cylinder (12)

3. Continuously rotary magnetic refrigerator or heat pump according to claim 1, wherein said rotating internal magnetocaloric cylinder (12) is rotated by a gear or belt drive pulley (15) mounted on the periphery of said rotating internal magnetocaloric cylinder (12) and moved by the said driving motor (15).

4. Continuously rotary magnetic refrigerator or heat pump according to claim 1, wherein said rotating internal magnetocaloric cylinder (12) is frame-suspended with bearings (16) including seals in the stationary external cylindrical housing (11 a).

5. Continuously rotary magnetic refrigerator or heat pump according to claim 1, wherein one half portion of the rotating internal magnetocaloric cylinder (12) is connected to a cold fluid duct (17) and the other half portion of the rotating internal magnetocaloric cylinder (12) is connected to a hot fluid duct (18).

6. Continuously rotary magnetic refrigerator or heat pump according to claim 5, wherein a flat separation (19) of the two ducts (17 and 18) is provided parallel to the longitudinal axis (13).

7. Continuously rotary magnetic refrigerator or heat pump according to claim 5, wherein at each longitudinal end of the external cylindrical housing (11a) a flange (20) is provided for connecting both fluid ducts (17, 18) and also for supporting a central axis (21) of the rotating internal magnetocaloric cylinder (12).

8. Continuously rotary magnetic refrigerator or heat pump according to claim 1, wherein the rotating internal magnetocaloric cylinder (12) comprises an extended cylindrical part (22) for supporting the gear or belt drive pulley (15).

9. Continuously rotary magnetic refrigerator or heat pump according to claim 1, wherein an annular space (11b) is provided between the stationary external cylindrical housing (11a) and the rotating internal magnetocaloric cylinder (12) containing a highly permeable fluid.

10. Continuously rotary magnetic refrigerator or heat pump according to claim 1, wherein the internal magnetocaloric cylinder (12) comprises at least two pairs of opposed sectors (30, 31 and 35,36) and is provided with at least one conduit (32) with one end connected to one sector (30) of one pair of sectors (30, 31) and the other end connected to the other sector (31) of said pair of sectors (30, 31) for transferring heat from one sector to the other for regeneration of heat in the rotating internal magnetocaloric cylinder (12).

11. Continuously rotary magnetic refrigerator or heat pump according to claim 1, comprising a plurality of cylindrical structures (110a, 110b, 110c, 110d) each provided with at least one external cylindrical housing (11a) containing at least one rotating internal magnetocaloric cylinder (12) containing at least one working fluid and which rotates around a longitudinal axis (13) through a magnetic field generated by at least one permanent magnet (14) located at one half portion of said at least one internal magnetocaloric cylinder (12) and generating flux lines crossing said at least one rotating internal magnetocaloric cylinder (12) in a direction perpendicular to the longitudinal axis (13), wherein the plurality of cylindrical structures (110a, 110b, 110c, 110d) are mounted in a cascade system (100) and defines a plurality of stages.

12. Continuously rotary magnetic refrigerator or heat pump according to claim 11, wherein each stage of the cascade system (100) comprises different and uniform and/or layered magnetocaloric material.

13. Process for magnetic heating and/or cooling in a continuously rotary magnetic refrigerator or heat pump comprising a cylindrical structure (11) provided with at least one stationary external cylindrical housing (11a) containing at least one rotating internal magnetocaloric cylinder (12) containing at least one working fluid and which rotates around a longitudinal axis (13) through a magnetic field generated by at least one permanent magnet (14) located at one half portion of said at least one internal magnetocaloric cylinder (12) and generating flux lines crossing said at least one rotating internal magnetocaloric cylinder (12) in a direction perpendicular to the longitudinal axis (13), in which the rotating internal magnetocaloric cylinder (12) comprises at least two pairs of opposed sectors (30, 31 and 35, 36); (II, VI and I, III - IV, V - VII, VIII - I) and is provided with at least one conduit (32; 40, 41, 42) with one end connected to one sector (30; I, VIII, VII) of one pair of opposed sectors (30, 31; II, VI and I, III - IV, V - VII, VIII - I) and the other end connected to the other sector (31; III, IV, V) of said pair of sectors (30, 31; II, VI and I, III - IV, V - VII, VIII - I), said process being **characterized in that** a progressive cooling down of the magnetocaloric material subjected to the magnetic field and a progressive heating up of the magnetocaloric material moving through the zone with less or no magnetic field is performed during the regeneration operation consisting of a continuous exchange of working fluid through the at least one said conduit (32; 40, 41, 42).
